# EUROPÄISCHE PATENTSCHRIFT

(11) **EP 1 848 833 B1**
(45) Veröffentlichungstag und Bekanntmachung des Hinweises auf die Patenterteilung: **04.07.2012**
(21) Anmeldenummer: 06706878.3
(22) Anmeldetag: 11.02.2006
(51) Int. Cl.: C21D 9/40, C21D 1/10, F16C 33/64

(54) **VERFAHREN ZUM HERSTELLEN EINES LAGERRINGES FÜR GROSSWÄLZLAGER MITTELS INDUKTIONSHÄRTEN**
METHOD FOR THE PRODUCTION OF A BEARING RING FOR LARGE-SIZE ROLLING BEARINGS
PROCEDE POUR PRODUIRE UN ANNEAU D'APPUI POUR UN GRAND APPUI CYLINDRIQUE

(30) Priorität: 15.02.2005 DE 102005006701
(43) Veröffentlichungstag der Anmeldung: 31.10.2007
(73) Patentinhaber: Rothe Erde GmbH, 44137 Dortmund (DE); EFD Induction GmbH, 79106 Freiburg (DE)
(72) Erfinder: SPINTIG, Wilfried, D-59558 Lippstadt (DE); ROLLMANN, Jörg, 59558 Lippstadt (DE); STAKEMEIER, Bernd, 59597 Erwitte (DE); BERGGREN, Kristian, 722 31 Västeras (SE)
(74) Vertreter: Dahlkamp, Heinrich-Leo
(86) Internationale Anmeldenummer: PCT/EP2006/001266
(87) Internationale Veröffentlichungsnummer: WO 2006/087152

(56) Entgegenhaltungen:
- GB-A- 735 378
- JP-A- 6 200 326
- JP-A- 55 008 403
- JP-A- 59 118 812
- JP-A- 60 116 724

## Beschreibung

Die Erfindung betrifft ein Verfahren zum Herstellen eines Lagerringes für Großwälzlager mit mindestens einer Laufbahn mit gehärteter Randschicht, bei dem die zu härtende Randschicht zum Erwärmen dem elektrischen Feld eines Induktors ausgesetzt und anschließend abgeschreckt wird.

Aus der GB 735 378 A ist ein Wärmebehandlungsverfahren für ringförmige Artikel bekannt, bei dem die zu härtende Randschicht zum Erwärmen dem elektrischen Feld eines Induktors ausgesetzt und anschließend abgeschreckt wird. Der ringförmige Artikel besteht dabei aus einem Getriebering mit großem Durchmesser, wie z. B. einem Starterring einer Verbrennungsmaschine. Im Vergleich zu den Ringen für Großwälzlager, die auch Durchmesser von ca. 10 Meter haben können, sind diese Getrieberinge allerdings relativ klein. Bei dem bekannten Verfahren werden 2 Induktoren zur Erwärmung der Ringe über einer gemeinsamen Zone der zu härtenden Oberfläche angeordnet, in entgegengesetzter Richtung entlang der ringförmigen Laufbahn bewegt bis sie an einer gegenüberliegenden Stelle zusammentreffen und wieder abgeschaltet werden. Während der Bewegung der Induktoren werden die erwärmten Flächen zur Härtung jeweils über eine Düse mit Kühlflüssigkeit beaufschlagt. Gleichzeitig wird automatisch die Endzone mit einer zusätzlichen Brause beaufschlagt.

Des Weiteren ist aus der JP 06 200326 A eine Vorrichtung zum Härten von Wälzlagerringen bekannt, wobei über zwei, von einem gemeinsamen Startpunkt aus startend und in gegenläufige Richtungen die Ringbahn abfahrende Induktoren die Ringbahnabschnitte entsprechend aufgeheizt und über zwei an den Induktoren befestigte Kühlbrausen die aufgeheizten Ringbahnabschnitte während des Abfahrens abgeschreckt werden. Dabei ist im gemeinsamen Treffpunkt der beiden Induktoren eine weitere, dritte Kühlbrause zur Abkühlung vorgesehen.

Unter Großwälzlagern im Sinne dieser Anmeldung sind Wälzlager zu verstehen, deren Lagerringe über axial eingebrachte Durchgangs- und/oder Gewindebohrungen mit den Anschlusskonstruktionen verschraubt sind. Großwälzlager können, je nach Ausführung eine oder mehrere Kugel- oder Rollenreihen besitzen. Zu jeder Kugel- oder Rollenreihe gehören zwei Laufbahnen, die in zwei bis drei Lagerringen spanend gefertigt und anschließend gehärtet werden. Derartige Lagerringe können als Nasenringe, Tragringe, Halteringe, scheibenförmige Axialringe, Außenringe oder Innenringe etc. ausgebildet sein.

Die Laufbahnen der Lagerringe von Großwälzlagern werden nach einem bekannten Verfahren mit ein oder zwei Induktoren im Vorschub gehärtet. Bei diesem induktiven Vorschubhärteverfahren ist zum Erwärmen der Laufbahn ein sogenannter Induktor, d.h. eine Induktionsspule oder ein Induktionsspulenpaar und zum Abschrecken eine am Induktor befestigte Brause zur Aufgabe von Kühlflüssigkeit über einer im Verhältnis zum Ringdurchmesser kleinen Zone der zu härtenden Laufbahn angeordnet. Beim Härten überstreichen Induktor und Brause einmalig die Kontur der Laufbahn des gesamten Ringes in Umfangsrichtung bei konstantem Vorschub des Ringes, sodass kontinuierlich jedes Segment der Laufbahn erwärmt und abgeschreckt wird.

Bei diesem bekannten Verfahren bleibt jeweils ein kleines verfahrensbedingt unvollständig gehärtetes Segment (Schlupf) am Endpunkt der Härtung, in dessen Bereich die Laufbahn weicher bleibt.

Weiterhin können die Laufbahnen der Lagerringe von Großwälzlagern nach dem in DE 10228333 C1 beschriebenen Verfahren mit ringförmigen Induktoren in einem Ganzflächenumlauferwärmungsverfahren, auch Schusshärtung genannt, auf dem gesamten Umfang gleichzeitig erwärmt und anschließend durch Abschreckung gehärtet werden. Der Vorteil dieses Verfahrens liegt in der Vermeidung der zuvor beschriebenen weichen Stelle.

Dieses Verfahren ist mit relativ hohen Kosten für die Induktoren und hohen erforderlichen Generatorleistungen verbunden. Bei sehr großen Ringen ist außerdem eine gleichmäßige Erwärmung auf Grund der temperaturbedingten Ausdehnung problematisch.

Der Erfindung liegt die Aufgabe zu Grunde, ein Verfahren zum Herstellen von Lagerringen für Großwälzlager anzugeben, mit dem in den Laufbahnen umlaufend gleichbleibend, d.h. schlupflos eine hohe Härte eingestellt werden kann.

Die Lösung dieser Aufgabe ist im Anspruch 1 angegeben. Die Unteransprüche 2 bis 6 enthalten sinnvolle ergänzende Maßnahmen.

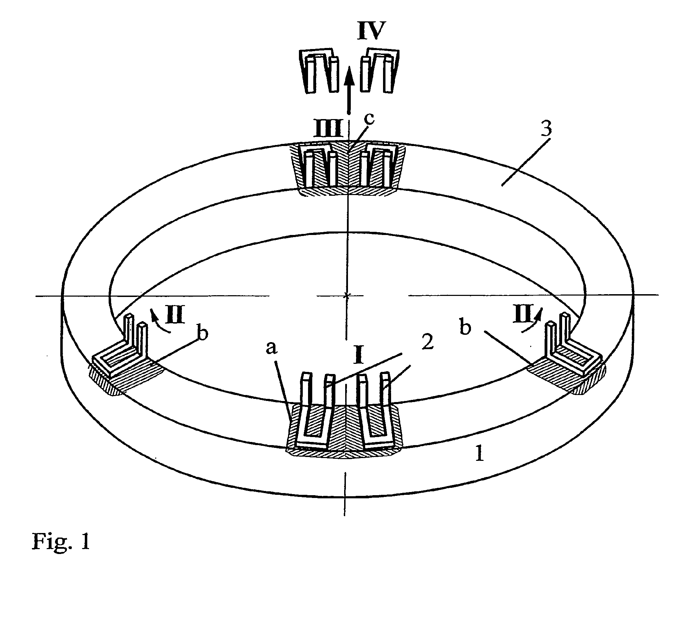

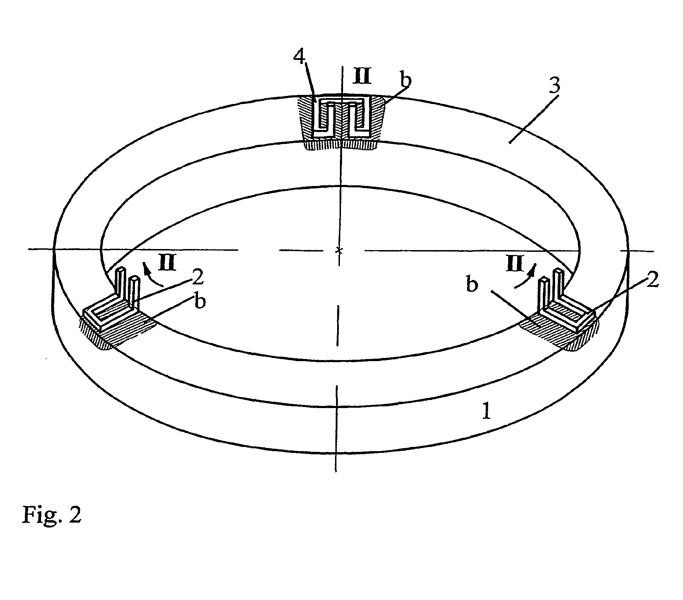

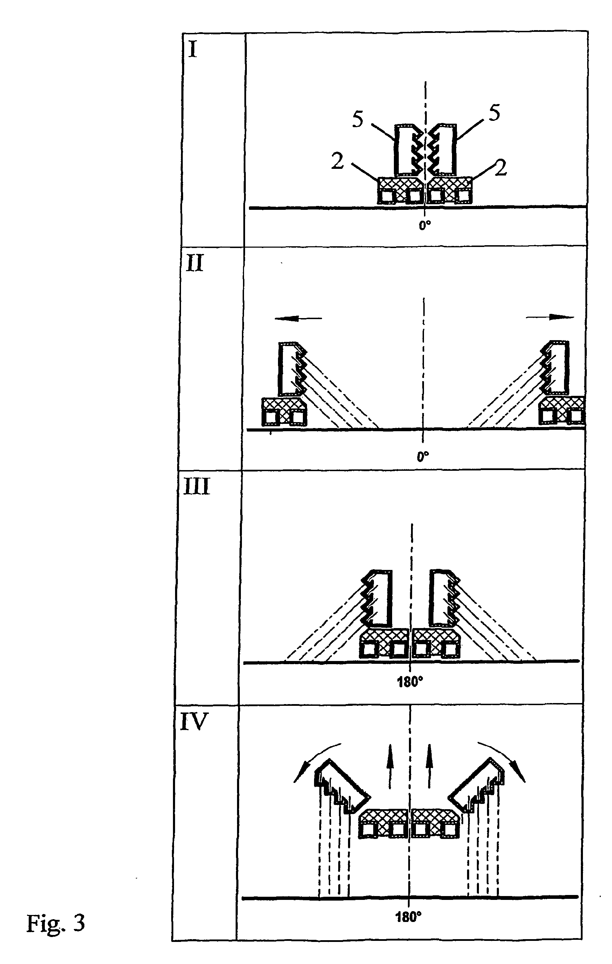

Bei dem erfindungsgemäßen Verfahren sind jeweils mindestens zwei Induktoren, vorzugsweise zwei Induktionsspulen oder zwei Induktionsspulenpaare und vorzugsweise daran befestigte Brausen über einer im Verhältnis zum Ringdurchmesser kleinen Zone der zu härtenden Laufbahn angeordnet. Zu Beginn des Verfahrens sind beide Induktoren unmittelbar nebeneinander angeordnet und erwärmen die darunter liegende Laufbahnrandschicht gleichmäßig auf Härtetemperatur (vgl. Pos.I in den beigefügten Figuren 1 und 3). Die Ausbildung einer gemeinsamen Heizzone konstanter Tiefe kann durch eine Pendelbewegung der Induktoren oder des Ringes und eine angepasste Leistungssteuerung erreicht werden. Anschließend bewegen sich beide Induktoren in jeweils entgegengesetzter Umfangsrichtung entlang der ringförmigen zu härtenden Randschicht der Laufbahn mit konstantem Vorschub auseinander. Nach einer kurzen Wegstrecke werden die vorzugsweise schwenkbar an den Induktoren befestigten Brausen eingeschaltet, schrecken die Mitte der zu Beginn erwärmten Zone ab und teilen die auf Härtetemperatur erwärmte Zone in zwei Hälften. Jeder Induktor überstreicht anschließend mit konstantem Vorschub die Laufbahnoberfläche einer Hälfte des Ringumfangs in entgegengesetzter Richtung (Pos. II), bis beide an einem dem Ausgangspunkt gegenüberliegenden Laufbahnabschnitt wieder zusammentreffen und eine gemeinsame Heizzone bilden (Pos. III). Es ist eine gleichzeitige Vorwärmung des dem Ausgangspunkt gegenüberliegenden Bereiches durch einen dritten Induktor vorgesehen (vgl. Fig. 2). Der dritte Induktor wird entfernt, sobald sich die zwei übrigen Induktoren zum Härten dieser Zone nähern und analog zu Pos. III von Fig. 1 eine gemeinsame Heizzone bilden. Wenn beide Induktoren eine gemeinsame, geschlossene Heizzone gebildet haben, in der die Laufbahnoberflächentemperatur auf Härtetemperatur liegt, entfernen sich beide Induktoren senkrecht von der Oberfläche. Durch Schwenken des Brausestrahls in den Raum zwischen Laufbahnoberfläche und Induktoren wird die gemeinsame Heizzone gleichzeitig abgeschreckt.

Als Maßnahme zur gleichmäßigen Erwärmung der Laufbahn in den Bereichen gemeinsamer Heizzonen der beiden Induktoren können zusätzlich Nuten oder Bohrungen, vorzugsweise radial oder axial verlaufend, an den Rändern der Laufbahn vorgesehen werden.

Die Erfindung wird anhand der beigefügten Figuren 1 bis 4 beispielsweise näher erläutert. Es zeigen
- Fig. 1 und 2: perspektivische Darstellungen eines Lagerringes mit verschiedenen Induktorpositionen I bis IV
- Fig. 3: schematisch im Querschnitt die Induktoren 2 und Brausen 5 in den verschiedenen Induktorpositionen I bis IV
- Fig.4a: ein Kreissegment der Laufbahn 3 mit der Darstellung der gemeinsamen Heizzonen a, c und
- Fig. 4b: eine veränderte Ausführungsform zu Fig. 4a mit an den Rändern der Laufbahn 3 eingebrachten Bohrungen oder Nuten 6, die zu der dargestellten Vergrößerung der gemeinsamen Heizzonen a, c führen.

Fig. 1 zeigt den Lagerring 1 mit der zu härtenden axialen Laufbahn 3 und die Induktoren 2 in den verschiedenen Induktorpositionen I bis IV. In der Position I zu Beginn der Erwärmung wird die gestrichelt dargestellte Zone a erwärmt. Die beiden Induktoren 2 bewegen sich dann entlang der ringförmigen Laufbahn 3 in Pfeilrichtung über die Position II mit den zugehörigen mittleren Erwärmungszonen b bis in die Position III mit der dortigen Erwärmungszone c. Nach dem Ende der Erwärmung werden die Induktoren 2 in axialer Richtung von der Position III angehoben in die Position IV, damit die an den Induktoren 2 schwenkbar befestigten Brausen auch die Randschicht im Bereich der Zone c abschrecken können.

In Fig. 3 sind die Induktoren 2 und Brausen 5 in den vier verschiedenen Induktorpositionen I bis IV schematisch dargestellt. In den Positionen I bis III sind die Brausen 5 oberhalb an den jeweiligen Induktoren 2 angeordnet. In den Positionen II und III sind die Brausestrahlen gestrichelt dargestellt und auf die Randschicht der Laufbahn gerichtet, die gerade mit Hilfe der Induktoren 2 erwärmt worden ist. In der Position I sind die Induktoren 2 noch direkt nebeneinander angeordnet und die Brausen 5 abgeschaltet. In der Position II haben die Induktoren 2 einen kurzen Weg von der 0°-Linie sich entfernt und die Brausestrahlen sind schräg nach rückwärts auf die Laufbahn gerichtet. In der Position III sind die Induktoren 2 wieder bis zur 180°-Linie zusammengeführt worden. Mit dem Anheben der Induktoren 2 nach Position IV werden die an den Induktoren schwenkbar befestigten Brausen 5 so geschwenkt, dass die Brausestrahlen zunächst senkrecht auf die Randschicht und später gegebenenfalls sogar auf die Fläche unter den Induktoren 2 gerichtet sind.

In Fig. 2 ist zusätzlich der Induktor 4 zum Vorwärmen dargestellt, der aus diesem Bereich entfernt wird, sobald sich die übrigen beiden Induktoren 2 diesem Bereich nähern.

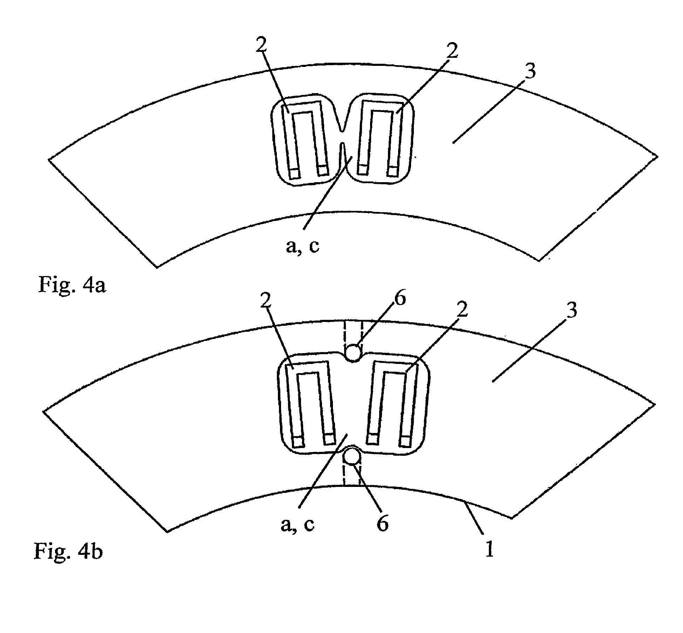

Aus den Fig. 4a und 4b ist ersichtlich, wie die gemeinsamen Heizzonen a, c vergrößert werden, wenn geeignete Bohrungen oder Nuten 6 an den Rändern der Laufbahn 3 eingebracht sind.

### Bezugszeichenliste:

- 1: Lagerring
- 2: Induktor (Induktionsspulen bzw. Induktionsspulenpaare)
- 3: Laufbahn von 1
- 4: Induktor zum Vorwärmen
- 5: Brause an 2
- 6: Bohrung oder Nut in 1

- a: Erwärmungszone zu Beginn
- b: mittlere Erwärmungszone
- c: Erwärmungszone zum Ende

- I: Induktorposition zu Beginn der Erwärmung
- II: Induktorposition während der Erwärmung und Härtung
- III: Induktorposition am Ende der Erwärmung und Härtung
- IV: Induktorposition nach dem Ende der Erwärmung

## Patentansprüche

1. Verfahren zum Herstellen eines Lagerringes (1) für Großwälzlager mit mindestens einer Laufbahn (3) mit gehärteter Randschicht, bei dem die zu härtende Randschicht zum Erwärmen dem elektrischen Feld eines Induktors ausgesetzt und anschließend abgeschreckt wird und
a) mindestens zwei Induktoren (2) zu Beginn der Härtung über einer gemeinsamen Zone (a) der zu härtenden ringförmigen Laufbahn (3) angeordnet sind und dort die gegenüberliegende Randschicht auf Härtetemperatur erwärmen,
b) zur Erwärmung der anschließenden mittleren Zonen (b) die Induktoren (2) in entgegengesetzter Richtung entlang der ringförmigen Laufbahn bewegt werden,
c) nach einer kurzen Wegstrecke auf die erwärmten Randschichten gerichtete Brausen (5) eingeschaltet und diese ausgehend von der Mitte der zu Beginn erwärmten Zone (a) abgeschreckt werden,
d) die Induktoren (2) und die Brausen (5) auf ihren Ringhälften weiter bewegt werden bis sie bei an einer dem Ausgangspunkt gegenüberliegenden Zone (c) wieder zusammentreffen und dort erneut eine gemeinsame Heizzone bilden,
e) nach Erreichen der erforderlichen Härtetemperatur der Zone (c) beide Induktoren (2) senkrecht von der Oberfläche der Laufbahn (3) abgehoben werden, **dadurch gekennzeichnet, dass**
f) die Brausen (5) auf die Zone (c) gerichtet werden,
g) wobei die Zone (c) bereits während der Erwärmung der Zonen (a) und/oder der Zonen (b) von einem zusätzlichen Induktor (4) vorgewärmt wird.

2. Verfahren nach Anspruch 1, **dadurch gekennzeichnet, dass** axiale und/oder radiale Laufbahnen (3) eines Lagerringes (1) nach dem erfindungsgemäßen Verfahren nacheinander oder gleichzeitig gehärtet werden.

3. Verfahren nach mindestens einem der vorhergehenden Ansprüche, **dadurch gekennzeichnet, dass** die Brausen (5) gemeinsam mit oder unabhängig von den Induktoren (2) entlang der zu härtenden Laufbahn (3) verfahren werden.

4. Verfahren nach mindestens einem der vorhergehenden Ansprüche, **dadurch gekennzeichnet, dass** die Brausestrahlen auch auf die Laufbahnfläche unter den Induktoren (2) gerichtet werden.

5. Verfahren nach mindestens einem der vorhergehenden Ansprüche, **dadurch gekennzeichnet, dass** die Induktoren (2) und/oder Brausen (5) bei der Bewegung entlang der zu härtenden Laufbahn pendelnd bewegt werden.

6. Verfahren nach mindestens einem der vorhergehenden Ansprüche, **dadurch gekennzeichnet, dass** in die gemeinsamen Erwärmungszonen zu Beginn (a) und/oder am Ende (c) radial oder axial verlaufende Bohrungen oder Nuten (6) an den Rändern der Laufbahn eingebracht werden.

## Claims

1. Method for producing a bearing ring (1) for large-size rolling bearings comprising at least one race (3) having a hardened peripheral layer, wherein the peripheral layer to be hardened is exposed to the electric field of an inductor in order to be heated and is then quenched, and
a) at the beginning of hardening, at least two inductors (2) are disposed over a common zone (a) of the annular race (3) to be hardened and heat the opposite peripheral layer to the hardening temperature at that location,
b) for heating the subsequent central zones (b), the inductors (2) are moved in the opposite direction along the annular race,
c) after a short distance has been covered, sprinklers (5) directed towards the heated peripheral layers are turned on and these layers are quenched starting from the centre of the zone (a) heated at the beginning,
d) the inductors (2) and the sprinklers (5) are further moved on their ring halves until they coincide at a zone (c) opposite the starting point and at that location again form a common heating zone,
e) after reaching the required hardening temperature of the zone (c), the two inductors (2) are lifted perpendicularly from the surface of the race (3),
**characterised in that**
f) the sprinklers (5) are directed towards the zone (c),
g) wherein the zone (c) is already pre-heated by an additional inductor (4) during heating of the zones (a) and/or the zones (b).

2. Method as claimed in Claim 1, **characterised in that** axial and/or radial races (3) of a bearing ring (1) are hardened consecutively or simultaneously according to the method in accordance with the invention.

3. Method as claimed in at least one of the preceding claims, **characterised in that** the sprinklers (5) are displaced along the race (3) to be hardened together with or independently of the inductors (2).

4. Method as claimed in at least one of the preceding claims, **characterised in that** the sprinkler-jets are also directed towards the race surface beneath the inductors (2).

5. Method as claimed in at least one of the preceding claims, **characterised in that** the inductors (2) and/or sprinklers (5) are moved in an oscillating manner during the movement along the race to be hardened.

6. Method as claimed in at least one of the preceding claims, **characterised in that** at the beginning (a) and/or at the end (c), radially or axially extending bores or grooves (6) are introduced at the edges of the race in the common heating zones.

## Revendications

1. Procédé de fabrication d'une bague de palier (1) pour un palier à roulement de grande dimension, avec au moins une voie de roulement (3) dotée d'une couche marginale durcie, dans lequel la couche marginale à durcir est soumise, pour la mise à température, au champ électrique d'un inducteur et ensuite trempée, et dans lequel,
a) au début du durcissement, au moins deux inducteurs (2) sont disposés au-dessus d'une zone commune (a) de la voie de roulement (3) annulaire à durcir et, là, chauffent à la température de durcissement la couche marginale opposée,
b) pour le chauffage des zones intermédiaires, adjacentes (b), les inducteurs (2) sont mus le long de la voie de roulement annulaire, dans la direction opposée,
c) après un cours parcours, des dispositifs d'aspersion (5), orientés vers les couches marginales chauffées, sont connectés, et celles-ci sont trempées à partir du centre de la zone (a) chauffée au début,
d) les inducteurs (2) et les dispositifs d'aspersion (5) continuent à être déplacés sur leurs demi-bagues jusqu'à ce qu'ils se rencontrent de nouveau dans une zone (c), située à l'opposé du point de départ, et y forment de nouveau une zone de chauffage commune,
e) après que la température de durcissement nécessaire de la zone (c) ait été atteinte, les deux inducteurs (2) sont soulevés verticalement de la surface de la voie de roulement (3),
**caractérisé en ce que**
f) les dispositifs d'aspersion (5) sont orientés vers la zone (c),
g) sachant que la zone (c) est déjà préchauffée par un inducteur (4) supplémentaire pendant la mise à température des zones (a) et / ou des zones (b).

2. Procédé selon la revendication 1, **caractérisé en ce que** des voies de roulement (3) axiales et / ou radiales d'une bague de palier (1) selon le procédé conforme à l'invention, sont durcies successivement ou simultanément.

3. Procédé selon l'une des revendications précédentes, **caractérisé en ce que** les dispositifs d'aspersion (5) sont déplacés le long de la voie de roulement à durcir (3), en commun avec les inducteurs (2) ou indépendamment de ceux-ci.

4. Procédé selon l'une des revendications précédentes, **caractérisé en ce que** les jets des dispositifs d'aspersion sont aussi orientés vers la surface de la voie de roulement, sous les inducteurs (2).

5. Procédé selon l'une des revendications précédentes, **caractérisé en ce que** les inducteurs (2) et / ou les dispositifs d'aspersion (5) sont mus comme un pendule, lors du déplacement le long de la voie de roulement à durcir.

6. Procédé selon l'une des revendications précédentes, **caractérisé en ce que**, dans les zones de chauffage communes, du début (a) et / ou de la fin (c), des alésages, qui s'étendent radialement ou axialement, sont pratiqués sur les bords de la voie de roulement.
